# EUROPEAN PATENT SPECIFICATION

(11) **EP 3 182 391 B1**
(45) Date of publication and mention of the grant of the patent: **06.05.2020**
(21) Application number: 16199898.4
(22) Date of filing: 21.11.2016
(51) Int. Cl.: G08B 17/103, G08B 17/113

(54) **ASPIRATED SMOKE DETECTOR WITH IMPROVED OPTICAL CHAMBER**
VENTILIERTER RAUCHMELDER MIT VERBESSERTER OPTISCHER KAMMER
DÉTECTEUR DE FUMÉE ASPIRÉE AVEC CHAMBRE OPTIQUE AMÉLIORÉE

(30) Priority: 14.12.2015 US 201514968136
(43) Date of publication of application: 21.06.2017
(73) Proprietor: Honeywell International Inc., Morris Plains, NJ 07950 (US)
(72) Inventor: BRESSANUTTI, Massimo, Morris Plains, NJ 07950 (US); MIHELI, Mauro, Morris Plains, NJ 07950 (US); PETRONIO, Dino, Morris Plains, NJ 07950 (US)
(74) Representative: Houghton, Mark Phillip

(56) References cited:
- WO-A1-03/007262
- US-A- 5 400 014
- US-A- 5 400 014
- US-A- 5 821 866
- US-A1- 2002 089 426
- US-B2- 9 098 988

## Description

### FIELD

The present invention relates generally to aspirated smoke detectors. More particularly, the present invention relates to an aspirated smoke detector with an improved optical chamber.

### BACKGROUND

Aspirated smoke detectors are known in the art, and known aspirated smoke detectors include a highly sensitive smoke sensor in an optical chamber of the detector. For example, the highly sensitive smoke sensors used in known aspirated smoke detectors are 10-50 times more sensitive than standard point photoelectric sensors.

Known aspirated smoke detectors include an emitter and a receiver. For example, the emitter can include a laser diode or high efficiency LED that emits light, and the receiver can include a sensing receiver, such as a photodiode. The laser diode can be combined with a lens and a mirror to output an optical signal with a high signal-to-noise ratio, and the sensing receiver can be illuminated by light that is scattered by smoke particles in the optical chamber, thereby triggering an alarm signal. In order to avoid saturation of the photodiode, known optical chambers are designed so that the high intensity beam emitted by the laser diode does not reach the receiver directly. Instead, the emitted light beam is projected onto a light trap, where a fraction of the luminous flux is captured by a second monitoring receiver for monitoring the proper operation of the optical system.

The described architecture of optical chambers with such highly sensitive smoke sensors, and other architecture known in the art, requires a complex and expensive manufacturing process. Moreover, the described complexity of these optical chambers influences the effectiveness of a calibration process and the reproducibility and repeatability of the detector.

Patent document US5821866 discloses a smoke detector with an easily replaceable canopy, having a labyrinth that produces a repeatable effect on the detection chamber. The canopy comprises multiple pegs having multi-faceted surfaces angularly spaced around the periphery of the canopy and having different shapes arranged in a repeating pattern.

Patent document number US5400014A describes a smoke detector which includes a dark chamber surrounded by a peripheral wall structure having a plurality of nested vanes. The second element of each vane is shorter than the first, and intersects the first element intermediate its ends at an acute angle. Adjacent vanes define a tortuous path that requires a minimum of three, and in most cases four, reflections for light to reach the inside of the chamber. Adjacent vanes define twisted channels leading from outside the chamber into the chamber for blocking light without substantially restricting the flow of air. The channels each include an outer section that extends in a direction toward the center of said chamber to define a channel entrance that admits airborne smoke with approximately equal resistance from opposite directions. The channels also define second and third sections that bend inwardly from the entrance toward said chamber, first in one direction and then sharply in another direction.

Patent document number US2002/089426A1 describes a smoke detecting chamber for use in a light-scattering type smoke detector which includes a chamber cover that forms one side of the smoke detecting chamber. The chamber cover includes a plurality of first baffles that prevent external light from entering the smoke chamber. The smoke detector further includes a chamber base that forms another side of the smoke detecting chamber, the chamber base including a plurality of second baffles that intermesh with the first baffles when the smoke detecting chamber is formed.

Patent document number US9098988B2 describes a device and method for manufacturing an integrated smoke cell. The smoke cell includes an integral housing with a ceiling portion and a smoke permeable wall forming a chamber when mounted on a printed circuit board. An emitter and detector are mounted above apertures in the chamber ceiling so the emitter and detector are mounted substantially outside the chamber while detecting smoke present within the chamber without blocking ingress of smoke through the chamber wall.

In view of the above, there is a continuing, ongoing need for an aspirated smoke detector with an improved optical chamber.

The present invention in its various aspects is as set out in the appended claims.

### BRIEF DESCRIPTION OF THE DRAWINGS

FIG. 1 is a perspective view of a first, inside side of a chamber cover in accordance with disclosed embodiments;
FIG. 2 is a top cross-sectional view of a chamber cover mounted on a detector to form an optical chamber in accordance with disclosed embodiments; and
FIG. 3 is a side cross-sectional view of a chamber cover mounted on a detector to form an optical chamber in accordance with disclosed embodiments.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein include an aspirated smoke detector with an improved optical chamber. In accordance with disclosed embodiments, the improved optical chamber can include a highly sensitive smoke sensor that can have a reliable calibration process. Moreover, the detector, including the optical chamber, can be highly reproducible, highly repeatable, and manufactured in a simple and cost-effective manner.

In some embodiments, an optical chamber as disclosed herein can include a single emitter and a single receiver integrated into one optical block, for example, a plastic optical block. Indeed, in some embodiments, the optical chamber as disclosed herein can eliminate the need for any mirrors, lenses, or other optical devices that need alignment.

In some embodiments, an optical chamber as disclosed herein can include a symmetrical cover that can permit smoke to easily enter the chamber. The chamber cover disclosed herein can also provide a repeatable way for a high gain optical system (including the optical chamber and the emitter, receiver, and their related electronics) to generate a signal with a low clean air value. In this regard, it is to be understood that a clean air value is the value of a signal output from a photodiode amplifier stage when the optical chamber is clean. It is to be further understood that the clean air value is the result of the interaction between the emitter and the receiver, their related electronic states (emitter driver and photodiode amplifier), and the optical chamber itself. When the clean air value of an output signal is low, the range of signal values for smoke detection can be wide.

In some embodiments, an optical chamber cover as disclosed herein can absorb the luminous flux of light emitted by the emitter and reflect only a small portion, in a repeatable way, on the receiver. To absorb and reflect in this manner, the chamber cover includes a plurality of input sector members that capture light and direct the captured light in angled corridors therebetween in such a manner so as to avoid multiple back reflections. When the luminous flux of the light emitted by the receiver is absorbed by the optical chamber cover, only a small amount of the light illuminates the walls of the optical chamber where dust and other small objects can settle. Accordingly, the optical chamber disclosed herein can have a high immunity to such dust and dirt.

The optical chamber as disclosed herein includes an optical block, which can include the emitter and the receiver, a base, for example, a plastic base, and a chamber cover. The optical block and the base can form a lower part of the optical chamber, and in some embodiments, the optical block can include the optical block as disclosed in U.S. Design Patent Application No. 29/405,060 filed June 26, 2014 and titled "Optical Block". U.S. Design Patent Application No. 29/405,060 is assigned to the assignee hereof and is hereby incorporated by reference.

The chamber cover as disclosed herein can form an upper and lateral part of the optical chamber. As explained above, the chamber cover includes a plurality of input sector members. In some embodiments, the input sector members can be modular and can have a repetitive structure to ensure low directionality while facilitating easy entrance for smoke into the chamber. As further explained above, the input sector members of the chamber cover capture light and direct the captured light in angled corridors therebetween while permitting only a low and reproducible back reflection, thereby enabling the low clean air value of a signal output by the receiver. Indeed, in some embodiments, the clean air value of an output signal can be used for a reliable and effective calibration and lifetime operation monitoring of a highly sensitive photoelectric sensor. In some embodiments, the calibration process can be executed in the production cell of the highly sensitive sensor at the end of the manufacturing process.

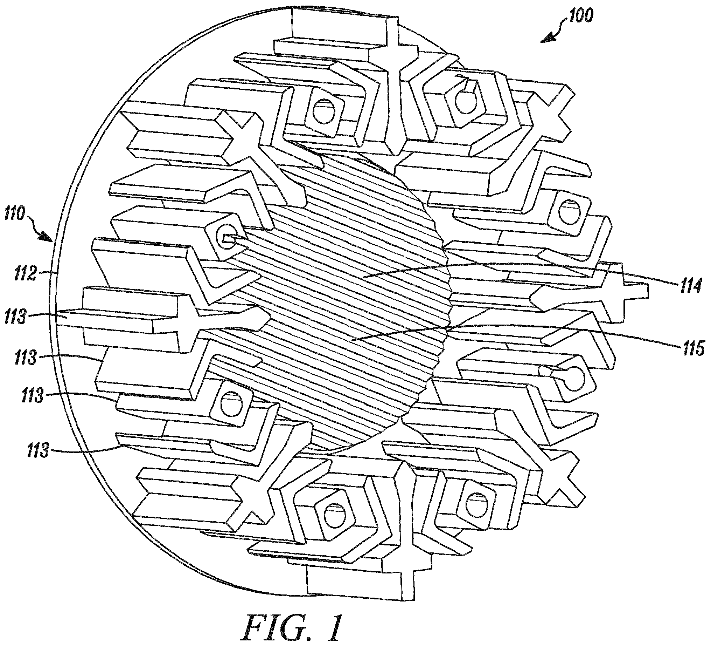

FIG. 1 is a perspective view of a first, inside side of a chamber cover 100 in accordance with disclosed embodiments. As seen in FIG. 1 the cover 100 can include a flat, annular disc 110 that includes an outer concentric ring 112 and an inner concentric ring 114. A plurality of ribs 115 can traverse the inner concentric ring 114 in any direction as would be desired by one of skill in the art and can cancel or attenuate light reflection of the chamber ceiling within the optical chamber.

A plurality of sector members 113 are disposed on the outer concentric ring 112 and protrude from the outer concentric ring 112 an equal distance away from the disc 110 such that each sector member 113 can have a substantially equal length. The sector members 113 have varying shapes, and are shaped and arranged relative to one another so as to form angled corridors therebetween that capture light and direct the captured light in such a manner so as to avoid multiple back reflections. As seen in FIG. 1, the sector members 113 are modular and have a repetitive structure. For example, in some embodiments, four or eight modules of sector members 113 can be disposed on the outer concentric ring 112 of the chamber cover 100 in a repeating manner.

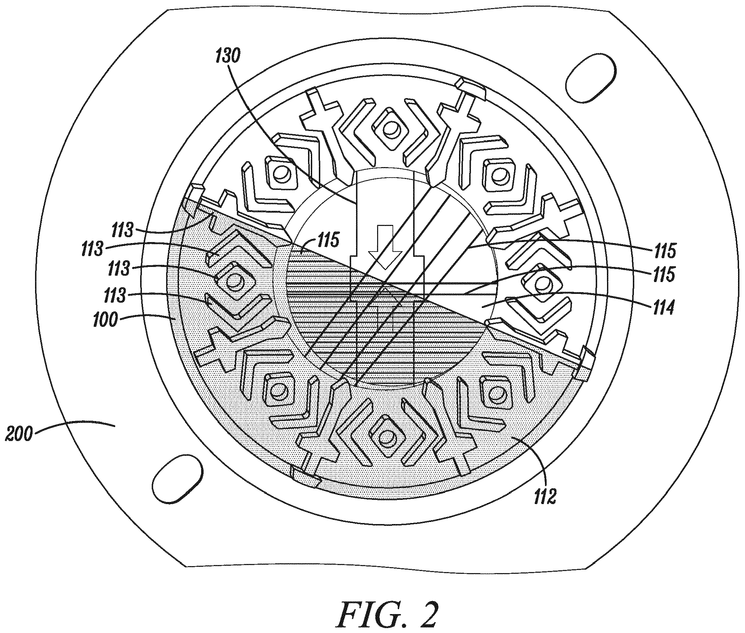

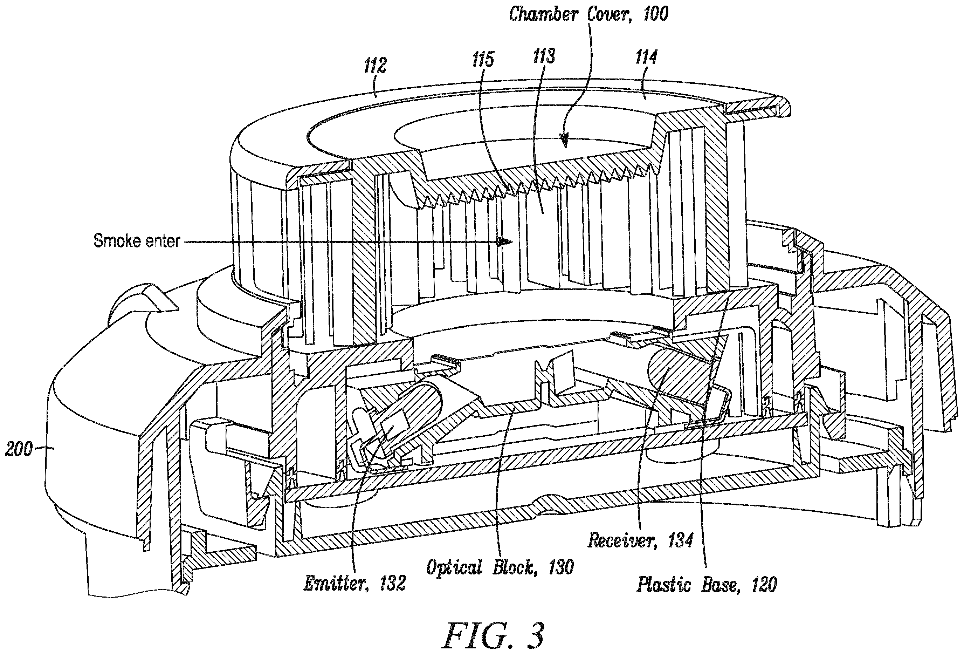

FIG. 2 is a top cross-sectional view and FIG. 3 is a side cross-sectional view of the chamber cover 100 mounted on a detector 200 to form an optical chamber in accordance with disclosed embodiments. As seen in FIG. 2, embodiments disclosed herein are not limited by the direction in which the ribs 115 traverse the inner concentric ring 114 of the chamber cover 100.

As further in seen in both FIG. 2 and FIG. 3, the chamber cover 100 can allow smoke to enter the optical chamber through the spaces between the sector members 113 and be disposed over a base 120 and an optical block 130 that includes an emitter 132 and a receiver 134, thereby forming the optical chamber. However, it is to be understood that the base 120 and the optical block 130 of the detector disclosed herein are not limitations of the present invention. Instead, the chamber cover 100 disclosed herein can be mounted on or in connection with any detector, base, or optical block as would be desired by one of ordinary skill in the art. For example, the chamber cover 100 disclosed herein can be mounted in a single or dual channel aspirating module or on a detector that includes a photoelectric sensor, such as, for example, a high sensitivity laser detector.

In some embodiments, the chamber cover disclosed herein can be manufactured via a thermoplastic molding process. For example, grains of virgin plastic can copy the shape of a metallic cavity when high temperatures and pressure are introduced in a dedicated press. In some embodiments, the optical block and the base can be manufactured in a separate manufacturing cell, and the emitter and receiver, such as a high sensitivity photoelectric sensor, can be calibrated thereafter while the optical block is in the manufacturing cell. Then, the manufactured optical block, base, and chamber cover can be mounted in an aspirating system as would be known in the art for final assembly of the detector.
Although a few embodiments have been described in detail above, other modifications are possible. For example, the logic flows
described above do not require the particular order described, or sequential order, to achieve desirable results. Other steps may be provided, or steps may be eliminated, from the described flows, and other components may be added to, or removed from, the described systems. Other embodiments may be within the scope of the invention.
From the foregoing, it will be observed that numerous variations and modifications may be effected without departing from the scope of the invention as defined by the appended claims. It is to be understood that no limitation with respect to the specific system or method described herein is intended or should be inferred.
It is, of course, intended to cover all such modifications as fall within the scope of the invention as defined by the claims.

## Claims

1. An aspirated smoke detector comprising:
a base (120);
an optical block (130) housed within the base (120), the optical block (130) housing an emitter (132) and a receiver (134); and
a chamber cover (100) disposed over the base (120) and the optical block (130) to form an optical chamber therebetween,
wherein the chamber cover (100) captures light emitted by the emitter (132) and reflects the light within the chamber cover (100) and to the receiver (134),
wherein the chamber cover (100) includes a plurality of different shaped sector members (113) disposed on an outer ring (112) of the chamber cover (100) and extending into the optical chamber,
wherein all the plurality of different shaped sector members (113) are grouped into a plurality of modules on the outer ring (112) with each module having a subset of the plurality of different shaped sector members (113),
wherein each subset of the plurality of sector members (113) contains the same different shaped sector members (113) as the other modules and wherein the sector members (113) are arranged in each module to form a repeating pattern of sector members (113), and
wherein each of the plurality of different shaped sector members (113) is arranged relative to one another so as to form a plurality of angled corridors therebetween and capture the light while avoiding multiple back reflections.

2. The aspirated smoke detector as in claim 1 wherein the chamber cover (100) is symmetrical.

3. The aspirated smoke detector as in claim 1 wherein each of the plurality of different shaped sector members (113) directs the light into a respective one of the plurality of angled corridors.

4. The aspirated smoke detector as in claim 1 wherein the chamber cover (100) includes an inner ring (114) concentric with the outer ring (112), and wherein a plurality of ribs (115) traverse the inner ring (114) and attenuate reflection of the light within the optical chamber.

5. The aspirated smoke detector as in claim 4 wherein the chamber cover (100) includes an annular disc (110) that includes the outer ring (112) and the inner ring (114).

6. The aspirated smoke detector as in claim 5 wherein each of the annular disc (110), the plurality of ribs (115), and the plurality of different shaped sector members (113) is symmetrical.

7. The aspirated smoke detector as in claim 1 wherein the group of the plurality of modules includes four of the plurality of modules.

8. The aspirated smoke detector as in claim 1 wherein the group of the plurality of modules includes eight of the plurality of modules.

## Patentansprüche

1. Ventilierter Rauchmelder, der Folgendes umfasst:
eine Basis (120);
einen optischen Block (130), der innerhalb der Basis (120) untergebracht ist, wobei in dem optischen Block (130) ein Sender (132) und ein Empfänger (134) untergebracht sind; und
eine Kammerabdeckung (100), die über der Basis (120) und dem optischen Block (130) angeordnet ist, um dazwischen eine optische Kammer zu bilden,
wobei die Kammerabdeckung (100) Licht, das von dem Sender (132) emittiert wird, fängt und das Licht innerhalb der Kammerabdeckung (100) und zu dem Empfänger (134) reflektiert,
wobei die Kammerabdeckung (100) eine Vielzahl unterschiedlich geformter Sektorelemente (113) beinhaltet, die auf einem Außenring (112) der Kammerabdeckung (100) angeordnet ist und sich in die optische Kammer erstreckt,
wobei alle der Vielzahl unterschiedlich geformter Sektorelemente (113) in eine Vielzahl von Modulen auf dem Außenring (112) gruppiert sind, wobei jedes Modul eine Teilmenge der Vielzahl unterschiedlich geformter Sektorelementen (113) aufweist,
wobei jede Teilmenge der Vielzahl von Sektorelementen (113) die gleichen unterschiedlich geformten Sektorelemente (113) wie die anderen Module enthält, und wobei die Sektorelemente (113) in jedem Modul angeordnet sind, um ein sich wiederholendes Muster von Sektorelementen (113) zu bilden, und
wobei jedes der Vielzahl unterschiedlich geformter Sektorelemente (113) zueinander derart angeordnet ist, dass eine Vielzahl abgewinkelter Gänge dazwischen gebildet wird, und das Licht gefangen wird, während mehrfache Rückreflexionen vermieden werden.

2. Ventilierter Rauchmelder nach Anspruch 1, wobei die Kammerabdeckung (100) symmetrisch ist.

3. Ventilierter Rauchmelder nach Anspruch 1, wobei jedes der Vielzahl unterschiedlich geformter Sektorelemente (113) das Licht in einen jeweiligen der Vielzahl abgewinkelter Gänge lenkt.

4. Ventilierter Rauchmelder nach Anspruch 1, wobei die Kammerabdeckung (100) einen Innenring (114) beinhaltet, der zu dem Außenring (112) konzentrisch ist, und wobei eine Vielzahl von Rippen (115) den Innenring (114) durchquert und die Reflexion des Lichts innerhalb der optischen Kammer abschwächt.

5. Ventilierter Rauchmelder nach Anspruch 4, wobei die Kammerabdeckung (100) eine ringförmige Scheibe (110) beinhaltet, die den Außenring (112) und den Innenring (114) beinhaltet.

6. Ventilierter Rauchmelder nach Anspruch 5, wobei jede der ringförmigen Scheibe (110), der Vielzahl von Rippen (115) und der Vielzahl unterschiedlich geformter Sektorelemente (113) symmetrisch ist.

7. Ventilierter Rauchmelder nach Anspruch 1, wobei die Gruppe der Vielzahl von Modulen vier der Vielzahl von Modulen beinhaltet.

8. Ventilierter Rauchmelder nach Anspruch 1, wobei die Gruppe der Vielzahl von Modulen acht der Vielzahl von Modulen beinhaltet.

## Revendications

1. Détecteur de fumée aspirée comprenant :
une base (120) ;
un bloc optique (130) logé à l'intérieur de la base (120), le bloc optique (130) logeant un émetteur (132) et un récepteur (134) ; et
un couvercle de chambre (100) disposé au-dessus de la base (120) et du bloc optique (130) pour former une chambre optique entre eux,
dans lequel le couvercle de chambre (100) capte la lumière émise par l'émetteur (132) et réfléchit la lumière à l'intérieur du couvercle de chambre (100) et vers le récepteur (134),
dans lequel le couvercle de chambre (100) comprend une pluralité d'éléments de secteur de formes différentes (113) disposés sur une bague externe (112) du couvercle de chambre (100) et s'étendant dans la chambre optique,
dans lequel toute la pluralité d'éléments de secteur de formes différentes (113) est groupée en une pluralité de modules sur la bague externe (112), chaque module comportant un sous-ensemble de la pluralité d'éléments de secteur de formes différentes (113),
dans lequel chaque sous-ensemble de la pluralité d'éléments de secteur (113) contient les mêmes éléments de secteur de formes différentes (113) que les autres modules et dans lequel les éléments de secteur (113) sont disposés dans chaque module pour former un motif répétitif d'éléments de secteur (113) et
dans lequel chacun des éléments de la pluralité d'éléments de secteur de formes différentes (113) est disposé l'un par rapport à l'autre de manière à former une pluralité de couloirs angulaires entre eux et à capturer la lumière tout en évitant de multiples réflexions arrière.

2. Détecteur de fumée aspirée selon la revendication 1, dans lequel le couvercle de chambre (100) est symétrique.

3. Détecteur de fumée aspirée selon la revendication 1, dans lequel chacun des éléments de la pluralité d'éléments de secteur de forme différente (113) dirige la lumière dans un couloir respectif de la pluralité de couloirs angulaires.

4. Détecteur de fumée aspirée selon la revendication 1, dans lequel le couvercle de chambre (100) comprend une bague interne (114) concentrique avec la bague externe (112) et dans lequel une pluralité de nervures (115) traversent la bague interne (114) et atténuent la réflexion de la lumière à l'intérieur de la chambre optique.

5. Détecteur de fumée aspirée selon la revendication 4, dans lequel le couvercle de chambre (100) comprend un disque annulaire (110) qui comprend la bague externe (112) et la bague interne (114).

6. Détecteur de fumée aspirée selon la revendication 5, dans lequel chacun du disque annulaire (110), de la pluralité de nervures (115) et de la pluralité d'éléments de secteur de forme différente (113) est symétrique.

7. Détecteur de fumée aspirée selon la revendication 1, dans lequel le groupe de la pluralité de modules comprend quatre modules de la pluralité de modules.

8. Détecteur de fumée aspirée selon la revendication 1, dans lequel le groupe de la pluralité de modules comprend huit modules de la pluralité de modules.
